(19) Europäisches Patentamt
European Patent Office
Office européen des brevets

(11) **EP 3 000 787 B1**

(12) **EUROPEAN PATENT SPECIFICATION**

(45) Date of publication and mention
of the grant of the patent:
**12.02.2020 Bulletin 2020/07**

(51) Int Cl.:
*C01G 23/00* (2006.01)       *H01M 4/485* (2010.01)
*H01M 10/052* (2010.01)

(21) Application number: **14801889.8**

(22) Date of filing: **09.04.2014**

(86) International application number:
**PCT/KR2014/003060**

(87) International publication number:
**WO 2014/189209 (27.11.2014 Gazette 2014/48)**

(54) **MANUFACTURING METHOD OF LITHIUM-TITANIUM COMPOSITE OXIDE DOPED WITH SODIUM AND ZIRCONIUM, AND LITHIUM-TITANIUM COMPOSITE OXIDE MANUFACTURED THEREBY**

VERFAHREN ZUR HERSTELLUNG VON NATRIUM- UND ZIRCONIUM-DOTIERTEM LITHIUM-TITAN-MISCHOXID UND SO HERGESTELLTES LITHIUM-TITAN-MISCHOXID

PROCÉDÉ DE FABRICATION D'UN OXYDE COMPOSITE DE LITHIUM-TITANE DOPÉ AVEC DU NATRIUM ET DU ZIRCONIUM ET OXYDE COMPOSITE DE LITHIUM-TITANE FABRIQUÉ PAR CE PROCÉDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.05.2013 KR 20130058563**

(43) Date of publication of application:
**30.03.2016 Bulletin 2016/13**

(73) Proprietors:
• **POSCO**
**Donghaean-ro, Nam-gu, Pohang-si**
**Gyeongsangbuk-do**
**37859 (KR)**
• **RESEARCH INSTITUTE OF INDUSTRIAL SCIENCE & TECHNOLOGY**
**Gyeongsanbuk-do**
**37673 (KR)**
• **POSCO Chemical Co., Ltd**
**Gyeongsangbuk-do (KR)**

(72) Inventors:
• **CHOI, Su Bong**
**Gumi-si**
**Gyeongsangbuk-do 730-370 (KR)**
• **CHOI, Jun Hwa**
**Gumi-si**
**Gyeongsangbuk-do 730-936 (KR)**
• **KO, Hyoung Shin**
**Gumi-si**
**Gyeongsangbuk-do 730-764 (KR)**
• **LEE, Jae An**
**Gumi-si**
**Gyeongsangbuk-do 730-764 (KR)**

(74) Representative: **Potter Clarkson**
**The Belgrave Centre**
**Talbot Street**
**Nottingham NG1 5GG (GB)**

(56) References cited:
EP-A1- 2 420 475       CN-A- 103 066 265
JP-A- 2002 145 619     JP-A- 2012 113 950
KR-A- 20110 114 392    US-A1- 2013 105 730

• YI, TING-FENG ET AL.: 'Spinel Li4Ti5-xZrxO12 (0?x?0.25) materials as high-performance anode materials for lithium-ion batteries' JOURNAL OF ALLOYS AND COMPOUNDS vol. 558, 16 January 2013, pages 11 - 17, XP028986898 DOI: 10.1016/J.JALLCOM.2013.01.018
• LI, XING ET AL.: 'Structural and electrochemical performances of Li4Ti5-xZrxO12 as anode material for lithium-ion batteries' JOURNAL OF ALLOYS AND COMPOUNDS vol. 487, 01 November 2009, pages L12 - L17, XP055052090 DOI: 10.1016/J.JALLCOM.2009.07.176

- **WANG, ZHENHONG ET AL.: 'Synthesis and electrochemical performances of Li4Ti4.95A10.05O12/C as anode material for lithium-ion batteries' JOURNAL OF PHYSICS AND CHEMISTRY OF SOLIDS vol. 72, 17 March 2011, pages 773 - 778, XP028211410 DOI: 10.1016/J.JPCS.2011.03.013**

**Description**

**BACKGROUND OF THE INVENTION**

**(a) Field of the Invention**

The present invention relates to a manufacturing method of a lithium-titanium composite oxide doped with sodium and zirconium, and to a lithium-titanium composite oxide doped with sodium and zirconium. More particularly, the present invention relates to a manufacturing method of a lithium-titanium composite oxide doped with sodium and zirconium after adjusting a mixing ratio of sodium and zirconium, solid-phase mixing them, pulverizing the same, and spray drying the same to adjust contents of impurities, and a lithium-titanium composite oxide doped with sodium and zirconium manufactured therefrom.

**(b) Description of the Related Art**

A non-aqueous electrolyte battery charged and discharged by lithium ions moving between negative and positive electrodes is actively researched and developed as a high energy density battery. Recently, a lithium-titanium composite oxide having a high Li intercalation/deintercalation potential has drawn attention. Since lithium metal is not extracted from the lithium-titanium composite oxide during lithium intercalation/deintercalation, the lithium-titanium composite oxide has an advantage of rapid charge and excellent low temperature performance.

This lithium-titanium composite oxide includes spinel-type lithium titanate represented by a general formula $Li_{(1+x)}Ti_{(2-x)}O_y$ (x = -0.2 to 1.0 and y = 3 to 4) and may be, for example, $Li_{4/3}Ti_{5/3}O4$, $LiTi_2O_4$, or $Li_2TiO_3$. This material has been conventionally used as a positive active material and may be used as a negative active material, and thus is much expected to continue to be used as a positive and negative electrode active material. This material has a voltage of 1.5 V with a reference to lithium and a long cycle-life. In addition, since expansion and contraction of the material is negligible during the charge-discharge, this material garners attention as an electrode material when a large-scale battery is manufactured. In particular, the spinel-type lithium titanate (represented by $Li_{4+x}Ti_5O_{12}$ ($0 \le x \le 3$)) has a small volume change during the charge and discharge and excellent reversibility, and thus receives attention.

However, the spinel-type lithium titanate has theoretical capacity of 175 mAh/g and thus has a limit in terms of high capacity. In addition, the spinel-type lithium titanate is partially phase-separated into rutile-type $TiO_2$ (r-$TiO_2$) during the manufacturing process.

The rutile-type $TiO_2$ (r-$TiO_2$) has a rock salt structure, and thus has electrochemical activity, but a problem of deteriorating effective capacity of the lithium-titanium composite oxide obtained therefrom due to a low reaction speed, an inclined potential curve, and small capacity occurs.

Documents CN 103066265 A, JP2012-1139050 A, and EP2420475 A1 disclose lithium titanium composite oxides doped with different metals.

**SUMMARY OF THE INVENTION**

In order to solve the problems of the prior arts, the present invention provides a manufacturing method of a lithium-titanium composite oxide having improved initial capacity and rate capability by doping sodium and zirconium, suppressing generation of anatase and rutile-type titanium dioxide, and controlling sizes of primary particles, and a lithium-titanium composite oxide doped with sodium and zirconium manufactured by the method.

In order to achieve the purpose, the present invention provides a manufacturing method of a lithium-titanium composite oxide doped with different metals that includes:

i) solid-phase mixing a lithium-containing compound, a titanium oxide, a different metal M-containing compound, and a different metal A-containing compound stoichiometrically;

ii) dispersing the solid-phase mixture of i) in a solvent and wet-pulverizing the mixture to provide particles having an average particle diameter of 0.3 $\mu$m to 0.8 $\mu$m to prepare a slurry;

iii) spray-drying the slurry to provide particles; and

iv) firing the spray-dried particles to manufacture a lithium-titanium composite oxide doped with different metals represented by the following chemical formula.

[Chemical Formula]          $Li_4Ti_{5-(x+y)}M_xA_yO_{12}$

(In the chemical formula, the M is Zr, the A is Na,

$$0.1 \leq x \leq 1.5, \ 0 < y \leq 1, \ x+y \leq 2, \text{ and } 8 \leq x/y \leq 9)$$

In the manufacturing method of a lithium-titanium composite oxide doped with different metals of the present invention, the Na-containing compound is selected from the group consisting of sodium carbonate, sodium hydroxide, or sodium carbonate and sodium hydroxide, and sodium hydroxide is preferable because it dissolves in a wet process.

In the manufacturing method of a lithium-titanium composite oxide doped with different metals of the present invention, the Zr-containing compound is $Zr(OH)_4$, $ZrO_2$, or a mixture thereof.

In the manufacturing method of a lithium-titanium composite oxide doped with different metals of the present invention, the titanium oxide is an anatase-type or titanium oxide hydrate.

In the manufacturing method of a lithium-titanium composite oxide doped with different metals of the present invention, the lithium-containing compound is lithium hydroxide or lithium carbonate.

In the manufacturing method of a lithium-titanium composite oxide doped with different metals of the present invention, in the ii) process, water is used for a solvent, and the wet-pulverizing is performed using zirconia beads at 2000 to 4000 rpm.

In the manufacturing method of a lithium-titanium composite oxide doped with different metals of the present invention, in the iii) process, the spray drying is performed while inflowing hot air at a temperature of 250 to 300 °C and discharging hot air at a temperature of 100 to 150 °C.

In the manufacturing method of a lithium-titanium composite oxide doped with different metals of the present invention, in the iv) process, the firing is performed by firing the spray-dried resultant of the iii) process under an air atmosphere at 700 to 800 °C for 5 h to 10 h.

In the manufacturing method of a lithium-titanium composite oxide doped with different metals of the present invention, the method further includes v) pulverizing the fired particles in the iv) process. In the present invention, a dry pulverizing method of the lithium-titanium composite oxide is not particularly limited, but the particles formed by the firing process are preferably pulverized to a microsize, specifically using a jet air mill.

The present invention provides a lithium-titanium composite oxide doped with two kinds of different metals that is manufactured by the dry pulverizing method, represented by the chemical formula, having a spinel structure, and including secondary particles formed by aggregating primary particles, wherein a diameter of the primary particles ranges from 0.2 $\mu$m to 0.6 $\mu$m and a diameter of the secondary particles ranges from 5 $\mu$m to 25 $\mu$m.

[Chemical Formula]         $Li_4Ti_{5-(x+y)}M_xA_yO_{12}$

(In the chemical formula, the M is Zr, the A is Na,

$$0.1 \leq x \leq 1.5, \ 0 < y \leq 1, \ x+y \leq 2, \text{ and } 8 \leq x/y \leq 9)$$

The lithium-titanium composite oxide doped with two kinds of different metals of the present invention has a main peak intensity of anatase-type $TiO_2$ of less than or equal to 1, a main peak intensity of R-$TiO_2$ of less than or equal to 1, and a main peak intensity of $Li_2TiO_3$ of less than or equal to 5 when a main peak intensity of $Li_{4/3}Ti_{5/3}O_4$ is 100.

The present invention provides a positive electrode including the lithium-titanium composite oxide doped with different metals of the present invention as a positive active material, or a negative electrode including the lithium-titanium composite oxide doped with different metals of the present invention as a negative active material.

The present invention provides a rechargeable lithium battery including a positive electrode including the lithium-titanium composite oxide doped with different metals of the present invention as a positive active material, or a rechargeable lithium battery including a negative electrode including the lithium-titanium composite oxide doped with different metals of the present invention as a negative active material.

Hereinafter, the present invention is described in detail.

The present invention provides a method of manufacturing the lithium-titanium composite oxide by simultaneously solid-phase mixing a lithium compound and a titanium compound as raw compounds and a different metal-containing compound for doping the raw compound with sodium and zirconium, and adjusting a ratio of the two kinds of different metals-containing compounds.

The titanium oxide-containing compound as a starting material may be any of a chloride, a sulfate, an organic salt, and the like. However, the titanium oxide-containing compound as a starting material may have a crystal structure such as anatase-type titanium dioxide or titanium oxide hydrate in order to manufacture a lithium-titanium composite oxide having excellent discharge capacity or battery characteristics as starting materials.

The anatase-type titanium dioxide needs to have purity of greater than or equal to 95 %, or greater than or equal to 98 %. When the purity is less than 95 %, capacity per weight of an active material is deteriorated. For example, the anatase-type titanium dioxide having high purity of 99.99 % may be used, but it is expensive. When the anatase-type titanium dioxide has purity of greater than or equal to 98 %, the influence of high purity in terms of an electrode active material becomes smaller than an influence on a particle diameter and a particle shape.

In the lithium compound in the manufacturing method of the present invention, a starting material may be a lithium salt such as lithium hydroxide, lithium hydroxide monohydrate, lithium oxide, lithium hydrogen carbonate, or lithium carbonate.

In the manufacturing method of the present invention, the different metal M of the doped two kinds of different metals is Zr, while the different metal A is Na, which is advantageous in terms of capacity characteristics and structural characteristics.

The Na-containing compound is preferably sodium hydroxide, sodium carbonate, or a mixture thereof. The Zr-containing compound is preferably $Zr(OH)_4$, $ZrO_2$, or a mixture thereof.

In the present invention, the different metal M may be doped in an amount of greater than or equal to 0.1 and less than or equal to 1.5 (i.e. x is greater than or equal to 0.1 and less than or equal to 1.5 in $Li_4Ti_{5-(x+y)}M_xA_yO_{12}$), while the different metal A may be doped in a range of >0 to 1 (i.e. y is greater than 0 and less than or equal to 1 in $Li_4Ti_{5-(x+y)}M_xA_yO_{12}$), and herein, the different metal M and the different metal A may be doped in a total amount of less than or equal to 2 and in a ratio of the doping amount x of the different metal M relative to the doping amount y of the different metal A satisfying $8 \leq x/y \leq 9$.

When the different metal M is doped in an amount of greater than 1.5, conductivity may be rather deteriorated, and overall performance of a battery may be deteriorated, and when the different metal A is doped in an amount of 0 , an effect of improving battery safety due to doping of the different metals may be insignificant.

The method of a lithium-titanium composite oxide according to the present invention provides an assembled powder of a secondary particle formed by aggregation of primary particles by mixing a lithium compound, a titanium compound, and a doping metal as starting materials stoichiometrically, dispersing a solid-phase mixture in a liquid medium, wet-pulverizing to prepare a slurry and spray-drying the slurry and firing the resultant using a known method.

In the manufacturing method of the present invention, the simultaneously-mixed lithium compound, titanium compound, and doping metal are dispersed in a dispersion medium and then wet-pulverized by using a medium-stirring type of grinder and the like. The dispersion medium used for wet-pulverizing slurry may be various organic solvents and aqueous solvents, but specifically may be water. The raw compounds may be used in an amount of greater than or equal to 50 wt% and less than or equal to 60 wt% based on the total weight of the slurry. When the weight ratio is less than the range, the slurry has an extremely thin concentration, and spherically-shaped particles obtained through the spray-drying may become unnecessarily small or be easily broken. When the weight ratio is greater than the range, it may be difficult to maintain uniformity of the slurry.

The wet-pulverization may be performed at 2000 to 4000 rpm, so that a solid in the slurry may have an average particle diameter (D50) ranging from 0.3 $\mu$m to 0.8 $\mu$m. When the solid in the slurry has too large an average particle diameter, sphericity as well as reactivity may be deteriorated during the firing process, and thus charge density of a final powder tends to be deteriorated. However, when the slurry is more than necessarily pulverized, the pulverization cost is increased, and thus the slurry may be wet-pulverized until the average particle diameter ranges from 0.3 $\mu$m to 0.8 $\mu$m.

Then, the lithium-titanium composite oxide powder of the present invention may be spray-dried to bond primary particles and form secondary particles, and herein, the primary particles may have a diameter ranging from 0.3 $\mu$m to 0.7 $\mu$m and the secondary particles may have a diameter ranging from 5 $\mu$m to 25 $\mu$m.

The spraying may be performed by pressing a nozzle having a predetermined hole size but using any commonly-used spray-drying equipment without a particular limit. In general, a sprayer is classified into a rotating disc type and a nozzle type, and the nozzle type of sprayer is classified into a pressure nozzle and a two-fluid nozzle. In addition, the sprayer may include any well-known equipment in a related field such as a rotary sprayer, a pressure nozzle, an air nozzle, a sonic nozzle, and the like. The spray equipment may be selected typically considering a supply speed, viscosity of a supply, a desired particle size of a spray-dried product, dispersion, a droplet size of a water-in-oil emulsion or a water-in-oil microemulsion, and the like.

In the step iii) of spray-drying the slurry of the step ii), a charge hot air temperature may be set at about to 250 to 300 °C, while a discharge hot air temperature may be set at 100 to 150 °C to improve a particle shape, a particle size, and crystallinity.

Then, a mixed powder obtained in this way is fired. The firing may be performed at greater than or equal to 600 °C, greater than or equal to 700 °C, in general greater than or equal to 900 °C, but specifically, greater than or equal to 800 °C depending on a kind of lithium compound and titanium oxide, metal compound such as different metals and the like, and the like, as a raw compound. Herein, the firing may be controlled depending on the composition of the raw compound, but when performed at too high a temperature, a primary particle may overgrow, while when performed at too low a temperature, volume density becomes small, and a specific surface area becomes extremely large.

The firing may be performed for different times depending on a temperature, but for greater than or equal to 30 min, greater than or equal to 5 h, but commonly greater than or equal to 20 h, and specifically, less than or equal to 10 h within the aforementioned temperature range. When the firing is performed for too short a time, a lithium-titanium composite oxide powder having excellent crystallinity is difficult to obtain, while when performed for too long a time, it is not p[particularly practical. In addition, when performed for too long a time, the lithium-titanium composite oxide powder needs to be pulverized or is difficult to crush, and thus the firing may be performed for less than or equal to 10 h.

The firing may be performed under an air atmosphere, or under an inert gas atmosphere such as nitrogen, argon, or the like depending on the composition or structure of a manufactured compound. The resultant is preferably pressed.

The method of manufacturing a lithium-titanium composite oxide doped with different metals according to the present invention may further include a step v) of pulverizing the fired particles. The fired particles may be pulverized in a dry pulverizing method, and the dry pulverization has no particular limit but may specifically be performed by using a jet air mill to have a micrometer size.

Another embodiment of the present invention provides particles pulverized by the additional dry-pulverizing step. In the present invention, the particles are primary particles and have a weaker bond through the dry pulverization and separation, and resultantly have a particle size $D_{50}$ ranging from 0.7 $\mu$m to 1.5 $\mu$m.

The present invention provides a lithium-titanium composite oxide doped with different metals manufactured by the manufacturing method according to the present invention and represented by the following chemical formula.

[Chemical Formula]     $Li_4Ti_{5-(x+y)}M_xA_yO_{12}$

(In the chemical formula, M is Zr, the A is Na,

$$0.1 \leq x \leq 1.5,\ 0 < y \leq 1,\ x+y \leq 2,\ \text{and}\ 8 \leq x/y \leq 9)$$

Each component of the lithium-titanium composite oxide doped with different metals synthesized in the present invention may have a composition adjusted by a ratio of each compound during the mixing, that is, a ratio of mixing of each compound. In addition, powder characteristics such as particle distribution, BET specific surface area, tap density, and pulverized powder density may be adjusted by a mixing method and an oxidation treatment.

The lithium-titanium composite oxide doped with different metals of the present invention includes secondary particles formed by aggregation of primary particles, wherein a diameter of the primary particles ranges from 0.5 $\mu$m to 0.8 $\mu$m and a diameter of the secondary particles ranges from 5 $\mu$m to 25 $\mu$m.

The lithium-titanium composite oxide doped with different metals manufactured according to the manufacturing method of the present invention has a spinel structure. Particularly, the lithium-titanium composite oxide doped with different metals manufactured according to the manufacturing method of the present invention has a main peak intensity of anatase-type $TiO_2$ of less than or equal to 1, a main peak intensity of R-$TiO_2$ of less than or equal to 1, and a main peak intensity of $Li_2TiO_3$ of less than or equal to 5 when a main peak intensity of $Li_{4/3}Ti_{5/3}O_4$ is 100.

The rutile-type titanium dioxide may show a main peak at $2\theta = 27.4$. The lithium-titanium composite oxide doped with different metals manufactured in the manufacturing method of the present invention includes the rutile-type titanium dioxide that deteriorates capacity as an impurity but shows a main peak size of less than or equal to 1 and is thus included in a very small amount, and accordingly, may increase battery capacity as well as crystallinity.

The method of manufacturing the lithium-titanium composite oxide doped with different metals according to the present invention may provide a titanium dioxide having excellent capacity characteristics and structural characteristics by mixing, pulverizing, and spray-drying different metals to dope two kinds of different metals on the surface of a lithium-titanium composite oxide in an appropriate ratio and reduce the content of conventional impurities such as rutile-type titanium dioxide, anatase-type titanium dioxide, and $Li_2TiO_3$, and accordingly, a battery including the titanium dioxide doped with different metals shows excellent battery characteristics such as high initial charge and discharge efficiency and rate capability.

## BRIEF DESCRIPTION OF THE DRAWINGS

FIG. 1 is a SEM photograph showing a lithium-titanium composite oxide doped with one kind of different metal according to one comparative example.

FIG. 2 shows capacity characteristics and rate capabilities of a test cell including the lithium-titanium composite oxide doped with one kind of a different metal according to one comparative example.

FIG. 3 is a SEM photograph showing a lithium-titanium composite oxide doped with sodium and zirconium according to one example of the present invention.

FIG. 4 shows capacity characteristics and rate capabilities of a test cell including the lithium-titanium composite oxide doped with sodium and zirconium according to one example of the present invention.

FIG. 5 is an XRD photograph showing the lithium-titanium composite oxide doped with sodium and zirconium according to one example of the present invention and a lithium-titanium composite oxide according to a comparative example.

## DETAILED DESCRIPTION

Hereinafter, embodiments of the present invention are described in detail. However, these embodiments are exemplary, and this disclosure is not limited thereto.

### <Example 1> Manufacture of Lithium-Titanium Composite Oxide Doped with One Kind of a Different Metal (comparative example)

One mol of lithium hydroxide and 1 mol of an anatase-type titanium oxide as a starting material are mixed with 0.1 mol of Zr as a different metal in a solid-phase, and they are then stirred and dissolved in water.

Next, a lithium-titanium composite oxide was manufactured by pulverizing the mixture using zirconia beads at 3000 rpm, spray-drying them at a hot air temperature of 270 °C and at a discharge hot air temperature of 120 °C, heat-treating them at two firing temperatures of 750 °C and 770 °C for 10 hours under an oxygen atmosphere, and dry-pulverizing them with a jet air mill.

Then, Al, Mg, and Na as different metals were respectively used in a ratio of 0.05 mol to manufacture each lithium-titanium composite oxide in the same method as above.

### <Experimental Example 1-1> Measurement of SEM Photograph (comparative example)

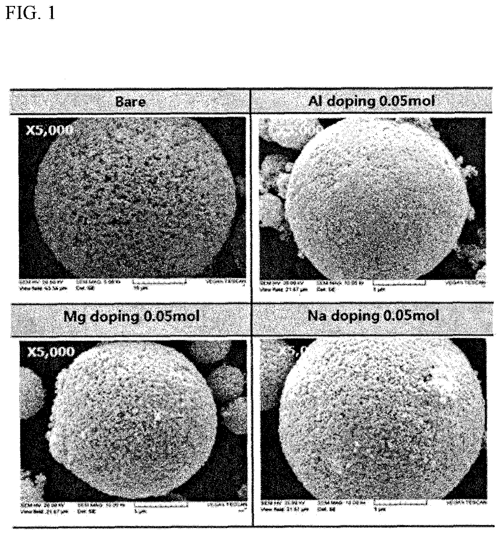

FIG. 1 shows a SEM photograph showing each lithium-titanium composite oxide doped with one kind of a different metal according to Example 1.

### <Experimental Examples 1 and 2> Evaluation of Battery Characteristics - Measurement of Capacity Characteristics and Rate Capability (comparative example)

The lithium-titanium composite oxide doped with one kind of a different metal according to Example 1 as a positive active material, a lithium foil as a counter electrode, and a porous polyethylene film (Celgard 2300 made by Celgard, LLC, thickness: 25 $\mu$m) as a separator, and a liquid electrolyte solution obtained by mixing ethylene carbonate and dimethyl carbonate in a volume ratio of 1:2 and dissolving $LiPF_6$ in a concentration of 1 mol in the mixed solvent were used according to a commonly-known method, manufacturing a coin cell. A coin cell according to the comparative example was manufactured according to the same method as above.

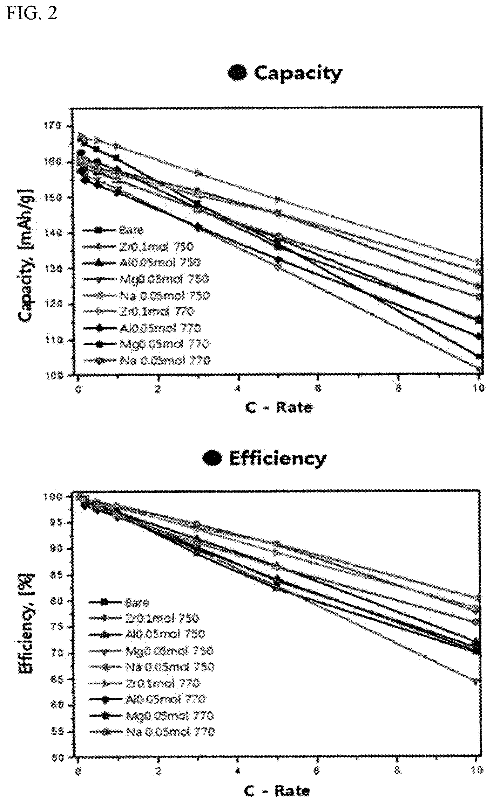

The capacity and rate capability of the test cell according to Comparative Example 1 including a lithium-titanium composite oxide doped with one kind of a different metal were measured, and the results are provided in FIG. 2. Referring to FIG. 2, the lithium-titanium composite oxide doped with Zr or Na turned out to improve the capacity characteristic and rate capability compared with the lithium-titanium composite oxide doped with Al or Mg.

### <Example 2> Manufacture of Lithium-titanium Composite Oxide Doped with Two Kinds of Different Metals

Each lithium-titanium composite oxide doped zirconium and sodium which showed an excellent capacity characteristic and rate capability in Example 1 was manufactured.

Firstly, 1 mol of lithium hydroxide and 1 mol of anatase-type titanium oxide, and 0.05 mol of zirconium as a starting material, were mixed in a solid phase with a mixture of sodium carbonate and sodium hydroxide as a sodium compound by changing their mol ratios to 0.006, 0.008, and 0.01, and the mixture was stirred and dissolved in water.

The solution was wet-pulverized with zirconia beads at 3000 rpm, spray-dried at a hot-air temperature of 270 °C and at a discharge hot-air temperature of 120 °C, respectively heat-treated at 750 °C and 770 °C for 10 h under an oxygen atmosphere, and dry-ground with a jet air mill, manufacturing a lithium-titanium composite oxide doped with two kinds of different metals.

### <Experimental Example 2-1> SEM Photograph Measurement

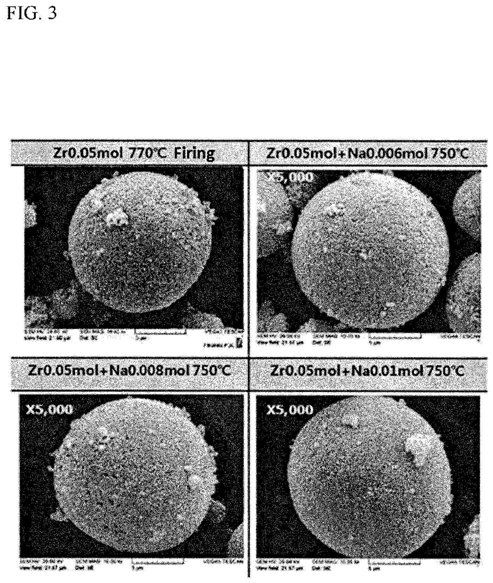

SEM photographs of particles of the lithium-titanium composite oxide doped with two kinds of different metals according to Example 2 and a lithium-titanium composite oxide doped with only Zr in an amount of 0.05 mol are provided in FIG. 3. When two kinds of different metals were doped in FIG. 3, the particle size was not changed.

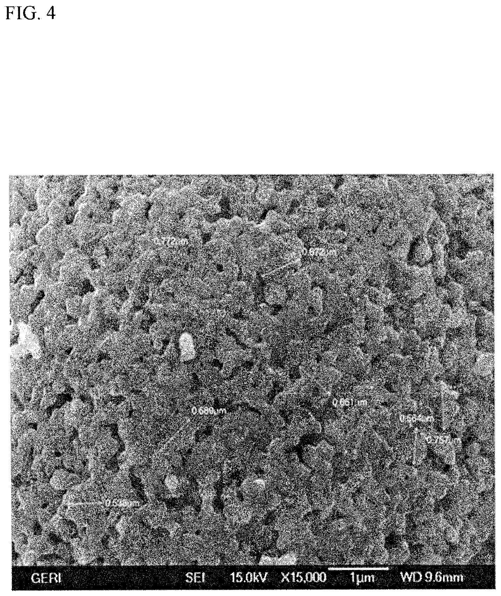

FIG. 4 shows the results of the primary particle size of the lithium-titanium composite oxide doped with two kinds of different metals according to Example 2. The primary particle size was in a range of 0.564 to 0.757 um.

**<Experimental Example 2-2> Electrochemical Characteristics**

The lithium-titanium composite oxide doped with two kinds of different metals according to Example 2 as a positive active material, a lithium foil as a counter electrode, a porous polyethylene film (thickness: 25 $\mu$m, Celgard 2300, Celgard LLC.) as a separator, and a liquid electrolyte solution prepared by mixing ethylene carbonate and dimethyl carbonate in a volume ratio of 1:2 and dissolving $LiPF_6$ in a concentration of 1 mol were used to manufacture a coin cell in a commonly-known method. A coin cell according to the comparative example was manufactured according to the same method as above.

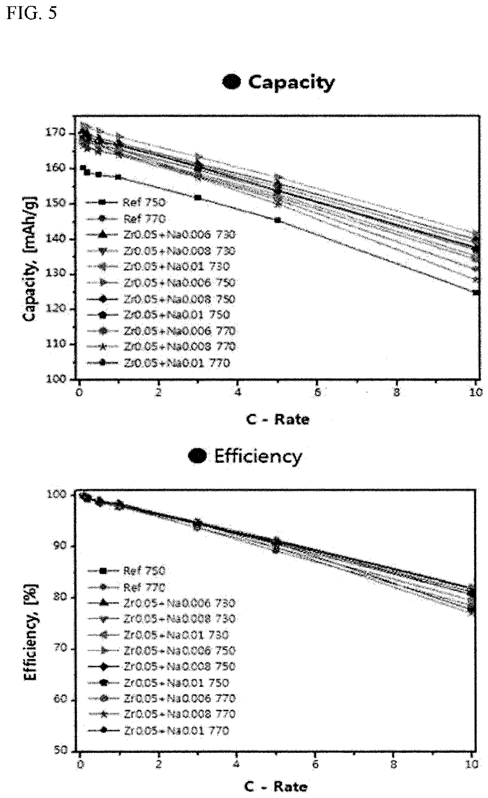

The capacity and rate capability of a test cell including the lithium-titanium composite oxide doped with two kinds of different metals according to Example 2 were measured, and the results are provided in FIG. 5. Referring to FIG. 5, the cells using lithium-titanium composite oxides respectively doped with two kinds of different metals of Zr and Na in an amount of 0.05 mol and 0.006 mol and heat-treating them at 750 °C according to the examples showed superior improvement rate capabilities compared with the cell using the lithium-titanium composite oxide according to the comparative example.

**<Experimental Example 2-3> XRD Measurement**

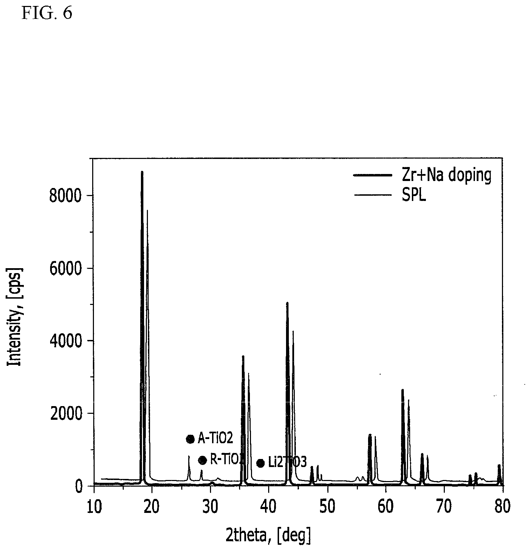

FIG. 6 shows the lithium-titanium composite oxides respectively doped with two kinds of different metals of Zr and Na in an amount of 0.05 mol and 0.006 mol and heat-treated at 750 °C according to the examples and the lithium-titanium composite oxide not doped with different metals according to the comparative example.

Referring to FIG. 6, the lithium-titanium composite oxides doped with two kinds of different metals of Na and Zr according to one example of the present invention had a spinel structure, and when $Li_{4/3}Ti_{5/3}O_4$ has a main peak intensity of 100, anatase-type $TiO_2$ had a main peak intensity of less than or equal to 1, rutile-type $TiO_2$ had a main peak intensity of less than or equal to 1, and $Li_2TiO_3$ had main peak intensity of less than or equal to 5. Battery performance turned out to be improved by controlling the content of impurities such as anatase-type titanium dioxide, rutile-type titanium dioxide, and $Li_2TiO_3$ doped with the Na and Zr as different metals and the like.

**Claims**

1. A manufacturing method of a lithium-titanium composite oxide doped with different metals, comprising:

    i) solid-phase stoichiometrically mixing a lithium-containing compound, a titanium oxide, a different metal M-containing compound, and a different metal A-containing compound;
    ii) dispersing the solid-phase mixture of the i) in a solvent and wet-pulverizing the mixture to have particles having an average particle diameter of 0.3 $\mu$m to 0.8 $\mu$m to prepare a slurry;
    iii) spray-drying the slurry to provide particles; and
    iv) firing the spray-dried particles to manufacture a lithium-titanium composite oxide doped with different metals represented by the following chemical formula:

    [Chemical Formula]     $Li_4Ti_{5-(x+y)}M_xA_yO_{12}$,

    in the chemical formula, the M is Zr and A is Na, 0.1≤x≤1.5, 0<y≤1, x+y≤2, and 8≤x/y ≤9.

2. The manufacturing method of claim 1, wherein the Zr-containing compound is $Zr(OH)_4$, $ZrO_2$, or a mixture thereof.

3. The manufacturing method of claim 1, wherein the Na-containing compound is selected from the group consisting of sodium carbonate, sodium hydroxide, sodium carbonate, and sodium hydroxide.

4. The manufacturing method of claim 1, wherein the titanium oxide is an anatase-type, or a titanium oxide hydrate.

5. The manufacturing method of claim 1, wherein the lithium-containing compound is lithium hydroxide or lithium carbonate.

6. The manufacturing method of claim 1, wherein in the ii) process, water is used as a solvent, and the wet-pulverizing is performed using zirconia beads at 2000 to 4000 rpm.

7. The manufacturing method of claim 1, wherein in the iii) process, the spray drying is performed while inflowing hot air at a temperature of 250 to 300 °C and discharging hot air at a temperature of 100 to 150 °C.

8. The manufacturing method of claim 1, wherein in the iv) process, the firing is performed by firing the spray-dried resultant of the iii) process at an air atmosphere at 700 to 800 °C for 5 h to 10 h.

9. The manufacturing method of claim 1, wherein the method further comprises v) pulverizing the fired particles in the iv) process.

10. The manufacturing method of claim 9, wherein the v) fired particles are pulverized using a jet air mill.

11. A lithium-titanium composite oxide doped with different metals, comprising secondary particles formed by aggregating primary particles, having a spinel structure, and represented by the following chemical formula, wherein a diameter of the primary particles ranges from 0.5 $\mu$m to 0.8 $\mu$m and a diameter of the secondary particles ranges from 5 $\mu$m to 25 $\mu$m:

[Chemical Formula] $\quad$ $Li_4Ti_{5-(x+y)}M_xA_yO_{12}$

in the chemical formula, the M is Zr and A is Na, $0.1 \leq x \leq 1.5$, $0 < y \leq 1$, $x+y \leq 2$, and $8 \leq x/y \leq 9$.

12. The lithium-titanium composite oxide doped with different metals of claim 11, wherein the lithium-titanium composite oxide doped with different metals has an XRD main peak intensity (CPS) of anatase-type $TiO_2$ of less than or equal to 1, a main peak intensity of $R-TiO_2$ of less than or equal to 1, and a main peak intensity of $Li_2TiO_3$ of less than or equal to 5 when a main peak intensity of $Li_{4/3}Ti_{5/3}O_4$ is 100.

13. A positive electrode for a rechargeable lithium battery comprising the lithium-titanium composite oxide doped with different metals of claim 11.

14. A negative electrode for a rechargeable lithium battery comprising the lithium-titanium composite oxide doped with different metals of claim 11.

15. A rechargeable lithium battery comprising the positive electrode of claim 13.

16. A rechargeable lithium battery comprising the negative electrode of claim 14.


**Patentansprüche**

1. Herstellungsverfahren für ein Lithium-Titan-Verbundoxid, das mit verschiedenen Metallen dotiert ist, Folgendes umfassend:

i) Stöchiometrisches Festphasenmischen einer lithiumhaltigen Verbindung, eines Titanoxids, einer verschiedenen metallhaltigen M-Verbindung und einer verschiedenen metallhaltigen A-Verbindung;
ii) Dispergieren des Festphasengemischs des i) in einem Lösungsmittel und das Nasszerkleinern des Gemischs, um Partikel mit einem durchschnittlichen Partikeldurchmesser von 0,3 $\mu$m bis 0,8 $\mu$m zu erhalten, um eine Aufschlämmung herzustellen;
iii) Sprühtrocknen der Aufschlämmung, um Partikel bereitzustellen; und
iv) Brennen der sprühgetrockneten Partikel, um ein Lithium-Titan-Verbundoxid herzustellen, das mit verschiedenen Metallen dotiert ist, die durch die folgende chemische Formel dargestellt werden:

[Chemische Formel] $\quad$ $Li_4Ti_{5-(x+y)}M_xA_yO_{12}$,

wobei in der chemischen Formel M Zr und A Na, $0{,}1 \leq x \leq 1{,}5$, $0 < y \leq 1$, $x + y \leq 2$ und $8 \leq x/y \leq 9$ ist.

2. Herstellungsverfahren nach Anspruch 1, wobei die Zr-haltige Verbindung $Zr(OH)_4$, $ZrO_2$ oder eine Mischung davon ist.

3. Herstellungsverfahren nach Anspruch 1, wobei die Na-haltige Verbindung aus der Gruppe bestehend aus Natriumcarbonat, Natriumhydroxid, Natriumcarbonat und Natriumhydroxid ausgewählt ist.

4. Herstellungsverfahren nach Anspruch 1, wobei das Titanoxid ein Anatastyp oder ein Titanoxidhydrat ist.

5. Herstellungsverfahren nach Anspruch 1, wobei die lithiumhaltige Verbindung Lithiumhydroxid oder Lithiumcarbonat ist.

6. Herstellungsverfahren nach Anspruch 1, wobei in dem ii) Vorgang Wasser als Lösungsmittel verwendet wird und das Nasszerkleinern unter Verwendung von Zirkoniumdioxidkugeln bei 2000 bis 4000 U/min durchgeführt wird.

7. Herstellungsverfahren nach Anspruch 1, wobei in dem iii) Vorgang das Sprühtrocknen durchgeführt wird, während Heißluft bei einer Temperatur von 250 bis 300 °C zugeführt wird und Heißluft bei einer Temperatur von 100 bis 150 °C abgegeben wird.

8. Herstellungsverfahren nach Anspruch 1, wobei in dem iv) Vorgang das Brennen durch Brennen des sprühgetrockneten Resultanten des iii) Vorgangs bei einer Luftatmosphäre bei 700 bis 800 °C für 5 bis 10 Stunden durchgeführt wird.

9. Herstellungsverfahren nach Anspruch 1, wobei das Verfahren ferner das v) Pulverisieren der gebrannten Partikel im iv) Vorgang umfasst.

10. Herstellungsverfahren nach Anspruch 9, wobei die v) gebrannten Partikel unter Verwendung einer Strahlluftmühle pulverisiert werden.

11. Lithium-Titan-Verbundoxid, das mit verschiedenen Metallen dotiert ist, umfassend sekundäre Partikel, die durch das Aggregieren von primären Partikeln gebildet sind, die eine Spinellstruktur aufweisen und durch die folgende chemische Formel dargestellt werden, wobei ein Durchmesser der primären Partikel von 0,5 $\mu$m bis 0,8 $\mu$m und ein Durchmesser der sekundären Partikel von 5 $\mu$m bis 25 $\mu$m liegt:

    [Chemische Formel]     $Li_4Ti_{5-(x+y)}M_xA_yO_{12}$,

    wobei in der chemischen Formel M Zr und A Na, $0,1 \leq x \leq 1,5$, $0 < y \leq 1$, $x + y \leq 2$ und $8 \leq x/y \leq 9$ ist.

12. Lithium-Titan-Verbundoxid, das mit verschiedenen Metallen nach Anspruch 11 dotiert ist, wobei das mit verschiedenen Metallen dotierte Lithium-Titan-Verbundoxid eine XRD-Hauptspitzenintensität (CPS) vom Anatastyp $TiO_2$ von weniger als oder gleich 1, eine Hauptspitzenintensität von $R$-$TiO_2$ von weniger als oder gleich 1 und eine Hauptspitzenintensität von $Li_2TiO_3$ von weniger als oder gleich 5 aufweist, wenn eine Hauptspitzenintensität von $Li_{4/3}Ti_{5/3}O_4$ 100 ist.

13. Positive Elektrode für eine wiederaufladbare Lithiumbatterie, umfassend das mit verschiedenen Metallen nach Anspruch 11 dotierte Lithium-Titan-Verbundoxid.

14. Negative Elektrode für eine wiederaufladbare Lithiumbatterie, umfassend das mit verschiedenen Metallen dotierte Lithium-Titan-Verbundoxid nach Anspruch 11.

15. Wiederaufladbare Lithiumbatterie, umfassend die positive Elektrode nach Anspruch 13.

16. Wiederaufladbare Lithiumbatterie, umfassend die negative Elektrode nach Anspruch 14.

**Revendications**

1. Procédé de fabrication d'un oxyde composite de lithium-titane dopé par différents métaux, comprenant :

    i) le mélange stoechiométrique en phase solide d'un composé contenant du lithium, d'un oxyde de titane, d'un composé différent contenant du métal M et d'un composé différent contenant du métal A ;
    ii) la dispersion du mélange en phase solide de i) dans un solvant et la pulvérisation à l'état humide du mélange pour obtenir des particules ayant un diamètre moyen de particules de 0,3 à 0,8 μm pour préparer une suspension ;

iii) le séchage par pulvérisation de la suspension afin d'obtenir des particules ; et

iv) la cuisson des particules séchées par pulvérisation pour fabriquer un oxyde composite de lithium-titane dopé par différents métaux représenté par la formule chimique suivante :

[Formule chimique] $Li_4Ti_{5-(x+y)}M_xA_yO_{12}$,

dans la formule chimique, M représente Zr et A représente Na, $0,1 \leq x \leq 1,5$, $0 < y \leq 1$, $x + y \leq 2$, et $8 \leq x/y \leq 9$.

2. Procédé de fabrication selon la revendication 1, dans lequel le composé contenant du Zr est $Zr(OH)_4$, $ZrO_2$, ou un mélange de ceux-ci.

3. Procédé de fabrication selon la revendication 1, dans lequel le composé contenant du Na est choisi dans le groupe constitué par le carbonate de sodium, l'hydroxyde de sodium, le carbonate de sodium et l'hydroxyde de sodium.

4. Procédé de fabrication selon la revendication 1, dans lequel l'oxyde de titane est de type anatase, ou un hydrate d'oxyde de titane.

5. Procédé de fabrication selon la revendication 1, dans lequel le composé contenant du lithium est l'hydroxyde de lithium ou le carbonate de lithium.

6. Procédé de fabrication selon la revendication 1, dans lequel, lors du processus ii), l'eau est utilisée comme solvant, et la pulvérisation à l'état humide est effectuée à l'aide des perles de zircone entre 2 000 et 4 000 tr/min.

7. Procédé de fabrication selon la revendication 1, dans lequel, lors du processus iii), le séchage par pulvérisation est effectué tout en injectant de l'air chaud à une température de 250 à 300 °C et en déchargeant de l'air chaud à une température de 100 à 150 °C.

8. Procédé de fabrication selon la revendication 1, dans lequel, lors du processus iv), la cuisson est effectuée par la cuisson du produit résultant du séchage par pulvérisation du processus iii) dans une atmosphère d'air comprise entre 700 et 800 °C pendant 5 à 10 h.

9. Procédé de fabrication selon la revendication 1, dans lequel le procédé comprend en outre v) la pulvérisation des particules cuites lors du processus iv).

10. Procédé de fabrication selon la revendication 9, dans lequel les particules cuites v) sont pulvérisées à l'aide d'un broyeur à jet d'air.

11. Oxyde composite de lithium-titane dopé par différents métaux, comprenant des particules secondaires formées par l'agrégation de particules primaires, ayant une structure spinelle, et représenté par la formule chimique suivante, dans laquelle le diamètre des particules primaires varie de 0,5 à 0,8 μm et un diamètre des particules secondaires est compris entre 5 et 25 μm :

[Formule chimique] $Li_4Ti_{5-(x+y)}M_xA_yO_{12}$,

dans la formule chimique, M représente Zr et A représente Na, $0,1 \leq x \leq 1,5$, $0 < y \leq 1$, $x + y \leq 2$ et $8 \leq x/y \leq 9$.

12. Oxyde composite de lithium-titane dopé par différents métaux selon la revendication 11, dans lequel l'oxyde composite de lithium-titane dopé par différents métaux présente une intensité de pic principale XRD (CPS) de $TiO_2$ de type anatase inférieure ou égale à 1, une intensité de pic principale de $R-TiO_2$ inférieure ou égale à 1, et une intensité de pic principale de $Li_2TiO_3$ inférieure ou égale à 5 lorsqu'une intensité de pic principale de $Li_{4/3}Ti_{5/3}O_4$ est de 100.

13. Electrode positive pour batterie au lithium rechargeable comprenant l'oxyde composite de lithium-titane dopé par différents métaux selon la revendication 11.

14. Electrode négative pour batterie au lithium rechargeable comprenant l'oxyde composite de lithium-titane dopé par différents métaux selon la revendication 11.

**15.** Pile rechargeable au lithium comprenant l'électrode positive selon la revendication 13.

**16.** Batterie au lithium rechargeable comprenant l'électrode négative selon la revendication 14.

FIG. 1

FIG. 2

● Capacity

● Efficiency

FIG. 3

FIG. 4

FIG. 5

FIG. 6

**EP 3 000 787 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 103066265 A
- JP 20121139050 A
- EP 2420475 A1